# EUROPÄISCHE PATENTANMELDUNG

(11) **EP 1 394 592 A1**
(43) Veröffentlichungstag der Anmeldung: **03.03.2004**
(21) Anmeldenummer: 02019358.7
(22) Anmeldetag: 29.08.2002
(51) Int. Cl.: G02B 27/01

(54) **Am Kopf tragbare Anzeigevorrichtung bei verbessertem Gesichtsfeld**

(71) Anmelder: Active Photonics AG, Visualisierungs- und Kommunikationssysteme, 9500 Villach (AT)
(72) Erfinder: Paul, Christian, 9500 Villach (AT); Oberwalder, Herman, 9701 Rothenthurn (AT); Reininger, Franz, 9500 Villach (AT)
(74) Vertreter: Vinazzer, Edith, Dipl.-Ing.

(57) **Zusammenfassung**

An einem Helm oder dergleichen anbringbares Anzeigesystem für mit einer Kamera oder dergleichen aufgenommene oder von sonstigen Einrichtungen stammende Bildinformationen, welche auf zumindest einen im Betriebszustand des Anzeigesystem im Blickfeld des Benützers positionierbaren Monitor übertragbar sind. Das Anzeigesystem ist (1) zur Benützung im Randbereich des Blickfeldes unterhalb der Hauptblickrichtung positionierbar und verfügt über Einstellmittel zur Anpassung an individuelle Parameter des Gesichtes bzw. der Augen des Benützers.

## Beschreibung

Die Erfindung betrifft ein an einem Helm oder dergleichen anbringbares Anzeigesystem für mit einer Kamera oder dergleichen aufgenommene oder von sonstigen Einrichtungen stammende Bildinformationen, welche auf zumindest einen im Betriebszustand des Anzeigesystems im Blickfeld des Benützers positionierbaren Monitor übertragbar sind.

Mit der Entwicklung von mikrooptischen Bauelementen, wie Displays unterschiedlicher Technologien und optischer Linsen, ist es möglich geworden, Anzeigesysteme ähnlich jenen einer optischen Brille zu entwickeln, mit deren Hilfe dem Betrachter Bildinformationen direkt im näheren Blickfeld zur Anzeige gebracht werden können. Von großem Nutzen sind derartige Anzeigesysteme bei Anwendungen, bei denen es undenkbar wäre, die Hände zum Halten des Sehbehelfs zu benützen. Eine typische "hands - free" Anwendung ist beispielsweise die Innenraumbrandbekämpfung. Zur Orientierung in verrauchter Umgebung und bei der Bergung von verunfallten Personen ist der Feuerwehrmann auf seine Hände angewiesen. Es gibt aber auch Montagetätigkeiten bei der Produktion von Industrieanlagen und dergleichen, wo eine Effizienzsteigerung möglich wäre, wenn die Monteure zum Ablesen von Informationen, wie Montageanleitungen, ihre Arbeit nicht unterbrechen müssten. Auch bei sportlichen Aktivitäten könnte die Übermittlung von bestimmten Informationen, wie Flug- und Wetterdaten, in den Bereich des Schutzhelmes von Gleitschirmfliegern und dergleichen sehr nützlich sein.

Es sind bereits Anzeigesysteme bekannt, die von Infrarotkameras aufgenommene Bilder auf ein Anzeigesystem übertragen. Insbesondere die Infrarotstrahlung von Menschen oder Brandherden lässt sich mit einer Infrarotkamera gut aufnehmen und darstellen.

Ein Anzeigesystem der eingangs genannten Art ist beispielsweise aus der PCT/AT 00/00337 bekannt. Diese bekannte Vorrichtung ist auch in einer binokularen Ausführung geoffenbart, bei der jeweils ein Monitor einem Auge der Person zugeordnet ist, wobei den Monitoren bei Bedarf ein optisches System zur besseren bzw. vergrößerten Darstellung des Bildes vorgeschaltet werden kann. Die Monitore sind in einem Rahmen aufgenommen, welcher über eine Dichtung an der Scheibe einer Atemschutzmaske dichtend anliegt. Zwischen der Vorrichtung (dem Anzeigesystem) und der Anlagefläche wird ein abgeschlossener Raum gebildet. Bei dieser bekannten Lösung wird das Anzeigesystems direkt vor den Augen positioniert, sodass das Blickfeld des Anwenders weitgehend eingeschränkt wird.

Die Erfindung hat sich daher die Aufgabe gestellt, ein möglichst universell und daher für unterschiedliche Anwendungsfälle geeignetes Anzeigesystem zu entwickeln, welches es dem Benützer erlaubt, bei der Benützung ein möglichst freies Blickfeld zu behalten und welches ein entspanntes und komfortables Sehen der vermittelten Bildinformationen gewährleistet.

Gelöst wird die gestellte Aufgabe erfindungsgemäß dadurch, dass das Anzeigesystem zur Benützung im Randbereich des Blickfeldes unterhalb der Hauptblickrichtung positionierbar ist und über Einstellmittel zur Anpassung des Monitors bzw. der Monitore an individuelle Parameter des Gesichtes bzw. der Augen des Benützers verfügt.

Ein erfindungsgemäß ausgeführtes Anzeigesystem lässt sich daher in eine "Betriebsstellung" bringen, die sich unterhalb der Hauptblickrichtung befindet. Oberhalb der Hauptblickrichtung befindet sich das freie Sichtfeld, welches nach oben durch den von der Augenrotation bestimmten Bereich begrenzt wird. Besonders vorteilhaft ist eine binokulare Ausführung des Anzeigesystems, da ein solches ein besonders komfortables und entspanntes Betrachten der übermittelten Bildinformationen gestattet. Ein erfindungsgemäß ausgeführtes Anzeigesystem verfügt nun über Einrichtungen, die eine Anpassung des Monitors bzw. der Monitore an individuelle Parameter des Benützers gestattet.

Erfindungsgemäß verfügt das Anzeigesystem über ein Einstellmittel zur Anpassung des Abstandes der Monitore an den Pupillenabstand des Benützers und insbesondere auch über ein Einstellmittel zur Anpassung der Neigung des Monitors bzw. der Monitore an den Blickwinkel des Benützers.

Als Einstellmittel zur Positionierung des Anzeigesystems und zur Anpassung der Monitore eignen sich insbesondere Drehachsen, an welchen das Anzeigesystem entsprechend angeordnet bzw. gelagert ist.

Die zur Positionierung des Anzeigesystems, unterhalb der Hauptblickrichtung aber innerhalb des monokularen Blickfeldes, vorgesehene Achse ist eine, bezogen auf den Benützer, entweder horizontal und quer zur Erstreckung des Körpers des Benützers orientierte Achse, oder eine vertikal verlaufende Achse und innerhalb eines, den Kopf des Benützers in einem Abstand umgebenden, zumindest im Wesentlichen kugelförmigen Raumes angeordnet. Dies ist auch jene Achse, die gemäß einer bevorzugten Ausführungsform der Erfindung direkt am Helm, an welchem das Anzeigesystem angebracht ist, angeordnet wird. Bevorzugte Positionen für diese Drehachse des Anzeigesystems sind oberhalb des vorderen Kopfbereiches, etwa bei Schutzhelmen, oder hinter dem Kinnbereich des Benützers.

Die zur Anpassung der Neigung des Monitors bzw. der Monitore an den Blickwinkel des Benützers vorgesehene Achse verläuft horizontal und in kreuzender Anordnung zu zwei weiteren, zur Anpassung der Position der Monitore an den Pupillenabstand vorgesehenen Achsen.

Die zur Anpassung der Neigung der Monitore an den Blickwinkel des Benützers vorgesehene Achse ist daher jene Achse, die eine Anpassung an die Gesichtshöhe des Benützers erlaubt.

Bei einer bevorzugten Ausführungsform der Erfindung sind die zur Anpassung der Position der Monitore an den Blickwinkel vorgesehene Achse und die zur Anpassung der Position der Monitore an den Pupillenabstand vorgesehenen Achsen so angeordnet, dass sie die beiden Monitore durchsetzen. Bei einer anderen möglichen Ausführungsform können diese Achsen auch außerhalb der Monitore positioniert sein, wobei in jedem Fall die zur Grobpositionierung des Anzeigesystems vorgesehene Achse zum Kopf des Benützers näher positioniert wird.

Die zur grundsätzlichen Positionierung des Anzeigesystems vorgesehene Achse ist mit jener zur Anpassung an den Blickwinkel vorgesehenen Achse über zumindest ein flexibles Verbindungselement verbunden, jedoch bezüglich der Einstellmöglichkeiten durch die beiden Achsen entkoppelt. Die flexiblen Verbindungselemente bewirken unter Schlageinwirkung oder dergleichen eine Energieaufnahme, sodass die weiteren Bestandteile des Anzeigesystems und deren Verbindungsteile zum Helm nicht zu hohen Belastungen ausgesetzt werden. Auch für den Benützer verringert sich die Verletzungsgefahr, beispielsweise der Wirbelsäule.

Bei einer bevorzugten Ausführungsform der Erfindung sind die beiden zur Anpassung der Monitore an den Pupillenabstand vorgesehenen Achsen gemeinsam verstellbar. Es ist jedoch auch eine Ausführung möglich, bei der diese beiden Achsen eine Anpassung des Abstandes der Monitore durch ein unabhängiges Verdrehen der beiden Monitore gestatten.

Vorzugsweise sind die beiden Monitore des Anzeigesystems jeweils mit einer Vergrößerungsoptik und einer bilderzeugenden Einrichtung versehen. Durch eine entsprechende Ausführung der Vergrößerungsoptik mit einer breiten bzw. weiten Eintrittspupille wird die Verwendung eines erfindungsgemäß ausgeführten Anzeigesystems für einen sehr breiten Anwenderkreis gewährleistet.

Als bilderzeugende Einrichtung eignen sich bekannte Einrichtungen, beispielsweise LCD, OLED und dergleichen.

Weitere Merkmale, Vorteile und Einzelheiten der Erfindung werden nun anhand der Zeichnung, die schematische Darstellungen von Ausführungsbeispielen der Erfindung zeigt, näher beschrieben.
Fig. 1 veranschaulicht eine vorteilhafte, grundsätzliche Positionierung von Drehachsen eines Anzeigesystems in Seitenansicht und Draufsicht,
Fig. 2 veranschaulicht die Definition des freien Sichtfeldes und jene von Blickrichtungen,
Fig. 3 zeigt in Schrägansicht eine Möglichkeit der Positionierung von Monitoren,
Fig. 4 zeigt eine Ausführungsvariante eines Anzeigesystems für einen Schutzhelm in Seitenansicht und in Draufsicht,
Fig. 5 zeigt in einer zu Fig. 4 analogen Darstellung eine weitere Ausführungsform eines Anzeigesystems für einen Schutzhelm,
Fig. 6 zeigt eine Ausführungsvariante eines Anzeigesystems für einen Sporthelm in Seitenansicht und in Draufsicht,
Fig. 7 zeigt den grundsätzlichen optischen Aufbau eines Anzeigesystems in Draufsicht und
Fig. 8 eine Möglichkeit der grundsätzlichen Anordnung der Monitore.

In den Zeichnungsfiguren sind Ausführungen binokularer Anzeigesysteme dargestellt, die bevorzugt sind. Ein erfindungsgemäß ausgeführtes Anzeigesystem kann aber auch ein monokulares sein.

Das erfindungsgemäße Anzeigesystem, welches an einem vom Benützer zu tragenden Helm oder dergleichen angebracht werden kann, eignet sich zur Anzeige von Bildinformationen, beispielsweise von mittels einer Infrarotkamera aufgenommenen Bildern, im Sichtfeld einer Person. Die Kamera ist nicht Gegenstand dieser Erfindung und kann beispielsweise seitlich oder stirnseitig am Helm angebracht sein. Die Position der Infrarotkamera kann auf beliebige und bekannte Weise einstellbar sein.

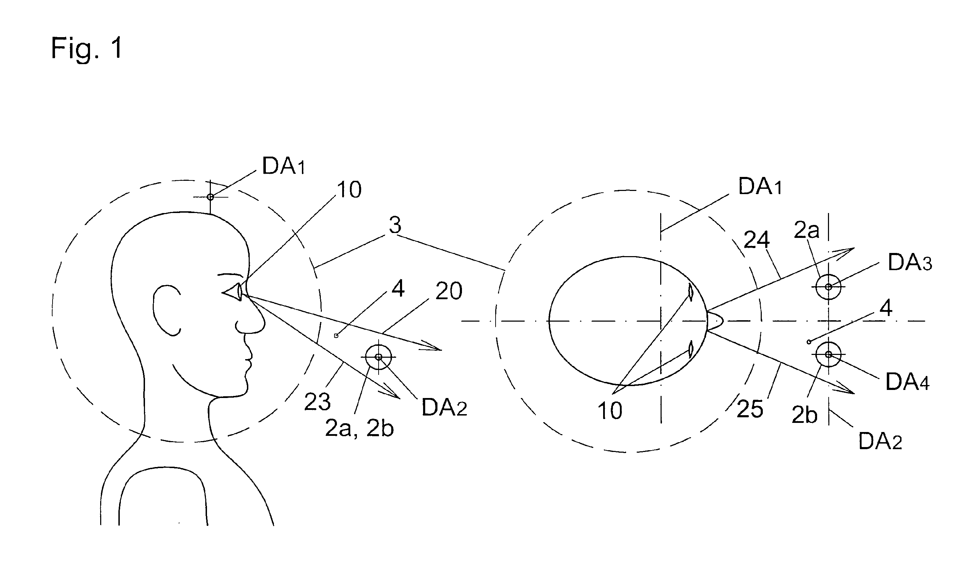

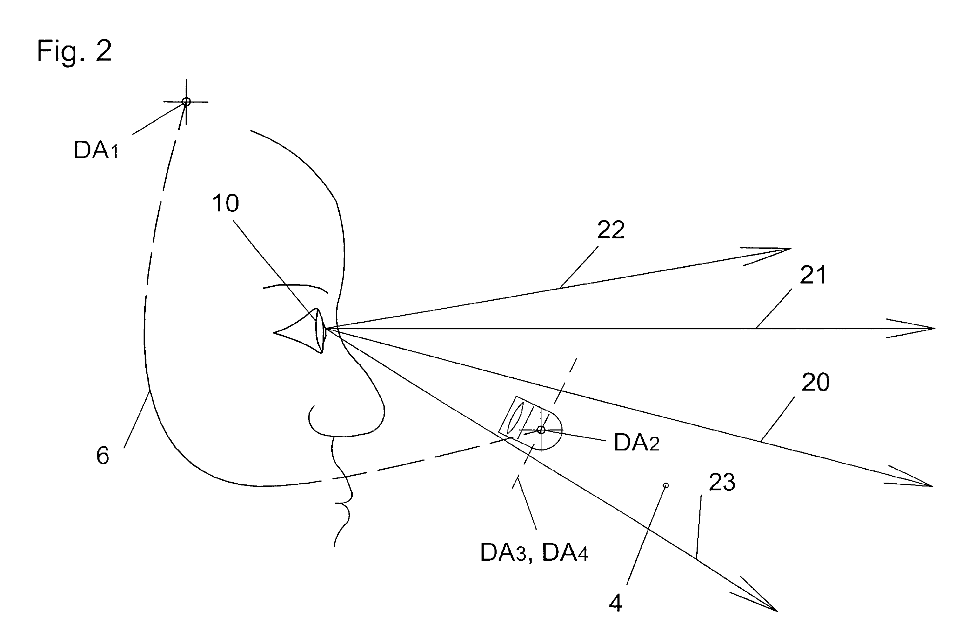

Fig. 1 zeigt in Seitenansicht den Oberkörper und den Kopf eines Benützers des Anzeigesystems und veranschaulicht eine Möglichkeit der grundsätzlichen Positionierung und der Verstellbarkeit zweier Monitore 2a, 2b, die Bestandteile des Anzeigesystems 1 sind. Die beiden Monitore 2a, 2b, deren Position in Fig. 1 lediglich angedeutet ist, befinden sich in ihrer Betriebsstellung im Raum zwischen der Hauptblickrichtung und der unteren Grenze des monokularen Blickfeldes. Die Definition dieser und weiterer, das Blick- und das freie Sichtfeld bestimmenden Parameter sind insbesondere Fig. 2 zu entnehmen. Die dargestellten Strahlen beginnen vom Auge 10 der in Fig. 2 angedeuteten Person. Der Strahl 20 verläuft in der Hauptblickrichtung, welche gegenüber der in der Horizontalen verlaufenden Nullblickrichtung, die durch den Strahl 21 gekennzeichnet ist, nach unten um einen Winkel in der Größenordung von 15 ° versetzt ist. Unterhalb der Hauptblickrichtung 20 befindet sich der Strahl 23, welcher die untere Grenze des monukularen Blickfeldes kennzeichnet. Zwischen der Hauptblickrichtung 20 und einem weiteren Strahl 22, welcher die obere Grenze des monokularen Blickfeldes definiert, befindet sich das freie Sichtfeld 4 in einem Winkelbereich von etwa 25 °, welcher durch den Bereich der möglichen Augenrotation bestimmt ist. Wie die Draufsicht aus Fig. 1 zeigt, wird das freie Sichtfeld 4 in horizontaler Richtung durch zwei miteinander einen Winkel einschließende Strahlen 24, 25 begrenzt. Der zwischen den Strahlen 24, 25 gebildete Winkel wird ebenfalls durch den möglichen Bereich der Augenrotation (+ / - 30 °) bestimmt.

Das Anzeigsystem 1 bzw. dessen beide Monitore 2a, 2b sind um eine Anzahl von Achsen DA₁, DA₂, DA₃, DA₄ drehbar gelagert. Die in den Zeichnungsfiguren gezeigten Ausführungsformen sehen folgende, in Fig. 1 grundsätzlich gezeigte Verstellmöglichkeiten durch eine drehbare Lagerung der Monitore 2a, 2b vor. Die Achse DA₁ ist eine horizontal verlaufende und in Körperquerrichtung des Benützers des Anzeigesystems 1 orientiere Achse. Die strichliert angedeutete, etwa kugelförmige Umhüllung 3 des Kopfes begrenzt jenen Raum, in welchem eine Anordnung der Achse DA₁ besonders sinnvoll ist. Bei der in Fig. 1 und Fig. 2 gezeigten Ausführung ist DA₁ oberhalb des vorderen Kopfbereiches angeordnet. Die Achse DA₁ erlaubt eine Grobpositionierung des Anzeigesystems innerhalb des bereits definierten Positionierfeldes. Die zweite Achse DA₂ verläuft parallel zur Achse DA₁ und vorzugsweise durch oder in unmittelbarer Nähe der beiden Monitore 2a, 2b. DA₂ gestattet ein gleichzeitiges Verdrehen beider Monitore 2a, 2b zur Anpassung des Anzeigesystems 1 an den jeweiligen Blickwinkel des Benützers. Jeder Monitor 2a, 2b ist ferner um eine weitere Achse DA₃, DA₄ drehbar angeordnet, wobei vorgesehen werden kann, dass beide Monitore 2a, 2b nur gemeinsam und gleichzeitig verdreht werden können, oder dass beide Monitore 2a, 2b unabhängig von einander drehbar sind. Die durch die Achsen DA₃ und DA₄ gegebene Verstellmöglichkeit gestattet eine Anpassung der Monitore 2a, 2b an den Pupillenabstand P_{D} des Benützers.

Bei einem gemäß der Erfindung binokularen Anzeigesystem werden die beiden übereinstimmend gezeigten Bilder vom Gehirn des Betrachters zu einem einzigen Bild zusammengefügt. Ein binokularen Anzeigesystem hat gegenüber einem monokularen den Vorteil, dass das Augenpaar keine Entkopplung verkraften muss. Bei einem monokularen Anzeigsystem wäre ein Entkoppeln erforderlich - das eine Auge 10 betrachtet die monokulare Anzeige, während das andere Auge 10 die Umgebung wahrnehmen soll.

Die bei einem erfindungsgemäßen Anzeigesystem 1 bevorzugt eingesetzte Optik ist eine Lupenoptik, bei der, wie bekannt, ein virtuelles Bild des wahrgenommenen Objektes erzeugt wird, wobei der Bildabstand größer als der Objektabstand ist. Es erfolgt daher eine Vergrößerung des Objektes und eine Projektion in die Ferne. Durch eine entsprechende Auslegung der Lupenoptik kann eine Erzeugung des virtuellen Bildes in einem Abstand von mehr als 10 m erreicht werden, sodass eine entspannte Betrachtung des erzeugten Bildes möglich ist.

In Fig. 2 ist angedeutet, dass die beiden Achsen DA₁ und DA₂ über jeweils ein seitlich verlaufendes, federelastisches Verbindungselement 6 miteinander verbunden sind. Die Achsen DA₁ und DA₂ sind aber voneinander derart entkoppelt, dass das Anzeigesystem 1 unabhängig um jede der Achsen DA₁, DA₂ verstellt werden kann. Fig. 2 zeigt auch die bevorzugte Lage der Achse DA₂ relativ zur Position der Monitore 2a und 2b. Die Achsen DA₃ und DA₄ kreuzen die Achse DA₂ und verlaufen zu dieser normal.

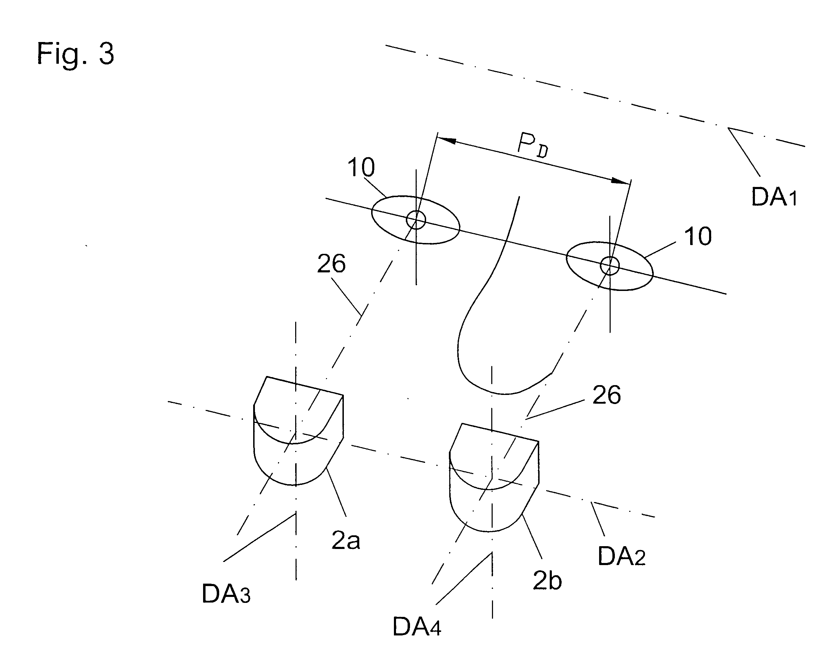

Fig. 3 veranschaulicht in Schrägansicht die Lagen der Achsen DA₁, DA₂, DA₃ und DA₄, der Pupillenabstand ist mit P_{D} bezeichnet. Die Achsen DA₂, DA₃ und DA₄ können auch außerhalb der Monitore 2a, 2b positioniert werden.

DA₁ soll eine großzügige Drehbewegung des Anzeigesystems gestatten, um bei Bedarf bzw. Nichtbenützung und zum Transport ein Positionieren des Anzeigesystems in eine nicht störende Lage sicher zu stellen, insbesondere in eine Lage, die außerhalb des Blickfeldes liegt. Eine Begrenzung des Verdrehbereiches ist trotzdem sinnvoll, insbesondere dann, wenn in den vorgesehenen Bügeln elektrische Leitungen geführt werden.

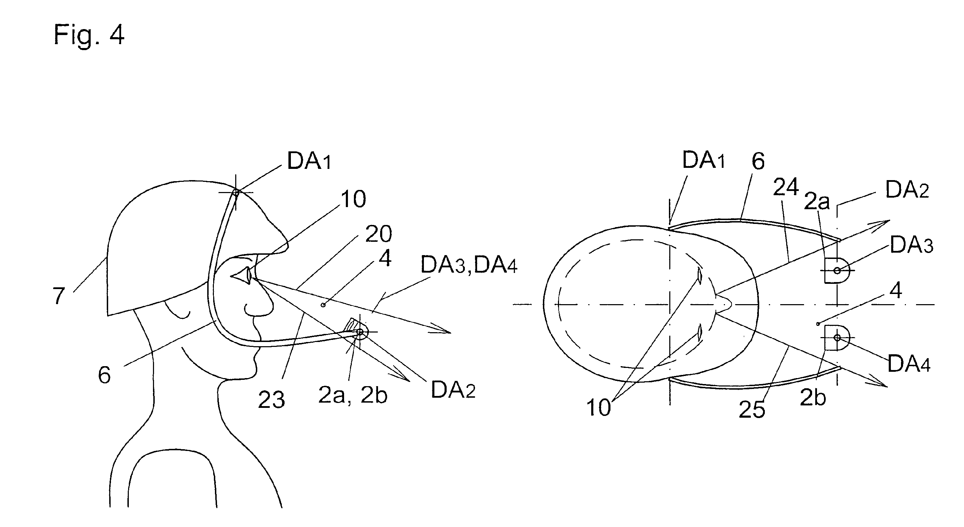

Fig. 4 zeigt schematisch eine mögliche Positionierung des Anzeigesystems 1 an einem Schutzhelm 7. Die Achse DA₁ befindet sich knapp oberhalb des Stirnbereiches am Schutzhelm 7, zwei seitliche Verbindungselemente 6 stellen eine Verbindung zur Achse DA₂ her. Die federelastischen Verbindungselemente 6 zwischen den Achsen DA₁ und DA₂ haben auf die Funktion des Anzeigesystems 1 keinen Einfluss. Sie sind jedoch bei der Benützung, beim Einsatz des Anzeigesystems 1 von großem Vorteil für die Aufnahme von Energie bei äußerer Schlageinwirkung oder dergleichen, sodass auf die weiteren Bestandteile der gesamten Einrichtung, wie Kameragehäuse, Drehgelenke etc., möglichst wenig Kraft übertragen wird. Auch wird auf diese Weise die Kraftübertragung auf die Wirbelsäule des Benützers entsprechend verringert.

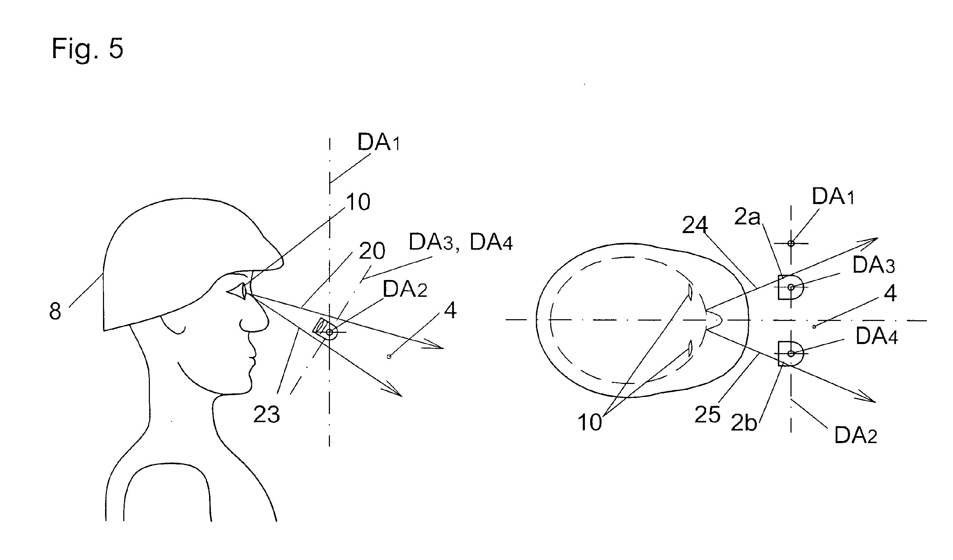

Bei der in Fig. 5 gezeigten Ausführungsform für einen Schutzhelm 8 erfolgt die Positionierung der Achse DA₁ vor dem Schutzhelm 8 und in vertikaler Richtung, beispielsweise mittels eines bügelartig ausgeführten, am Helm 8 angeordneten Verbindungsteils. Die Achse DA₂ befindet sich in größerer Entfernung vom Schutzhelm 8, bezogen auf die Position der Achse DA₁ und kreuzt sich im Bereich der beiden Monitore 2a, 2b mit den Achsen DA₃ und DA₄.

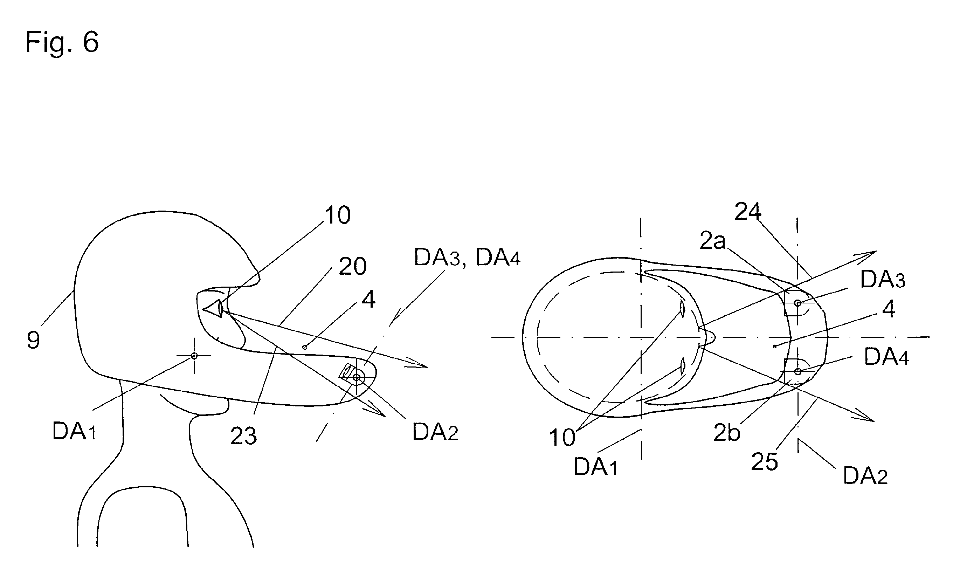

Fig. 6 zeigt eine Möglichkeit der Anordnung des Anzeigesystems 1 bei einem Sporthelm 9. Die Position zur Benützung des Anzeigesystems 1 erfolgt im oben definierten Bereich zwischen der Hauptblickrichtung (Strahl 20) und der unteren Grenze (Strahl 23) des Blickfeldes. Die Achse DA₁ befindet sich im Bereich des Sporthelmes 9 in einer Position hinter dem Kinn der den Helm tragenden Person. Die Achse DA₂ und die Achsen DA₃ und DA₄ sind, wie bei den bereits beschriebenen Ausführungsformen, in kreuzender Anordnung vorgesehen.

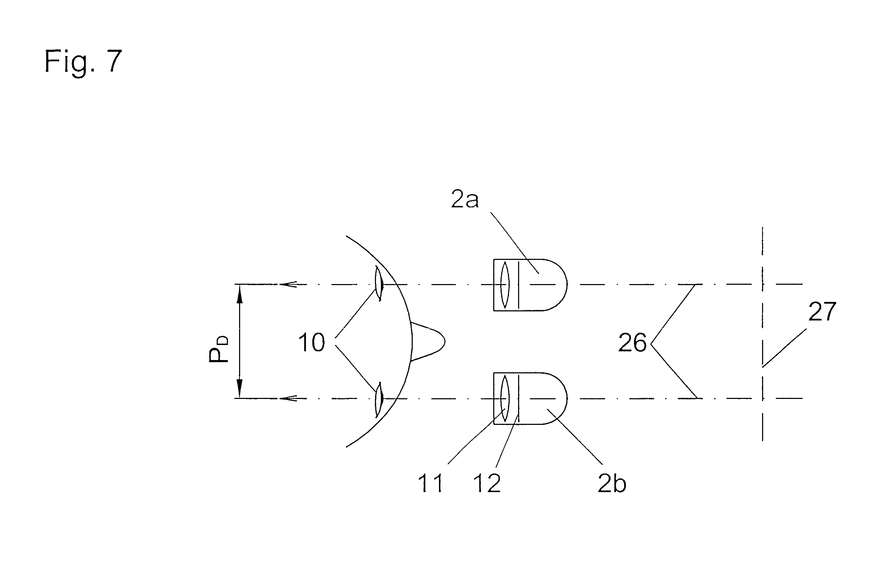

Schließlich zeigt Fig. 7 den grundsätzlichen optischen Aufbau des aus zwei Monitoren 2a, 2b bestehenden Anzeigesystems 1. Angedeutet sind die beiden Augen 10 des Betrachters und der Pupillenabstand P_{D} zwischen den beiden Augen. Mit 26 sind die beiden optischen Achsen bezeichnet, die jeweils zentral die Monitore 2a, 2b durchsetzen. Die beiden Monitore 2a, 2b weisen jeweils eine Vergrößerungsoptik 11 und eine bilderzeugende Einrichtung 12 auf, welche in bekannter Weise ausgeführt sein können. Die Vergrößerungsoptik 11 kann insbesondere ein bis drei Linsen oder mehr als drei Linsen umfassen. Als bilderzeugende Einrichtung eignen sich beispielsweise LCD, OLED etc.. Die strichlierte Linie 27 versinnbildlicht die Bildebene, in welcher das vom Betrachter zu sehende, virtuelle Bild erzeugt wird. Durch eine entsprechende Ausführung der Vergrößerungsoptik 11 mit einer entsprechend breiten bzw. weiten Eintrittspupille kann erreicht werden, dass in Kombination mit der mechanischen Positioniervorrichtung nahezu sämtliche Anwender in der Lage sind, ein virtuelles vergrößertes Bild in der Bildebene wahrzunehmen.

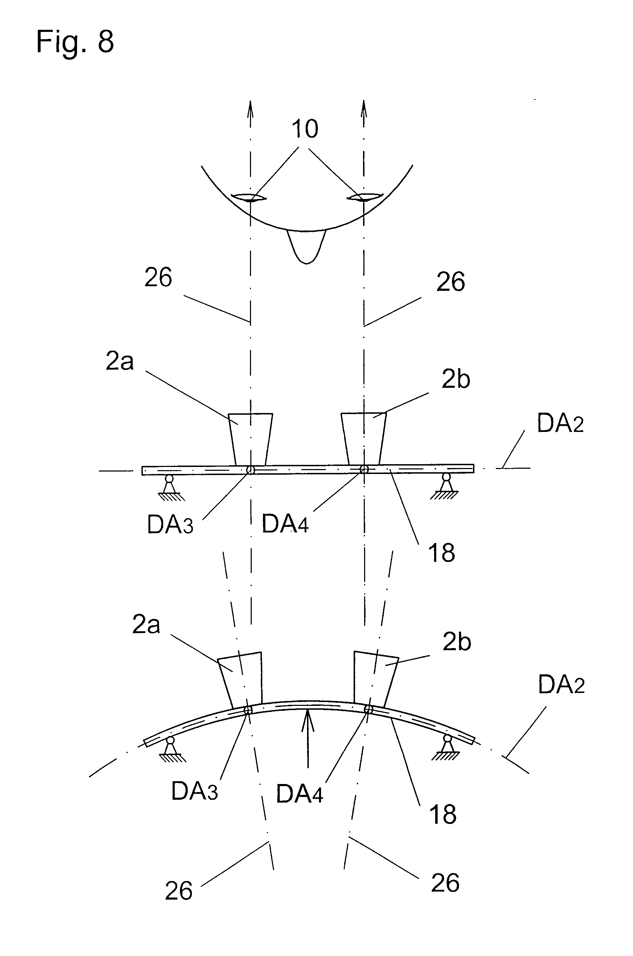

Fig. 8 veranschaulicht eine Möglichkeit der Anordnung der beiden Monitore 2a, 2b an einer Art biegbaren Balken 18 durch starres Befestigen. Eine nicht gezeigte mechanische Einrichtung kann nun den Balken 18 derart verbiegen, dass sich die optischen Achsen DA₃ und DA₄ aus ihrer ursprünglich parallelen Anordnung drehen, wie es der untere Bereich der Fig. 8 zeigt. Wird der Balken 18 zusätzlich noch drehbar gelagert, wäre auch die Achse DA₂ realisiert.

Die beschriebene Lage der Drehachsen bezieht sich auf einen aufrecht stehenden Benützer des Anzeigesystems, sodass "vertikal" in Richtung Schwerkraft verlaufend bedeutet und die "Horizontale" dazu normal verläuft. Die beschriebenen und dargestellten Lagen der Drehachsen sind ferner bevorzugte Lagen, eine andere Wahl der Achspositionen ist daher durchaus möglich.

## Patentansprüche

1. An einem Helm oder dergleichen anbringbares Anzeigesystem für mit einer Kamera oder dergleichen aufgenommene oder von sonstigen Einrichtungen stammende Bildinformationen, welche auf zumindest einen im Betriebszustand des Anzeigesystem im Blickfeld des Benützers positionierbaren Monitor übertragbar sind,
**dadurch gekennzeichnet,**
**dass** das Anzeigesystem (1) zur Benützung im Randbereich des Blickfeldes unterhalb der Hauptblickrichtung positionierbar ist und über Einstellmittel zur Anpassung an individuelle Parameter des Gesichtes bzw. der Augen des Benützers verfügt.

2. Anzeigesystem nach Anspruch 1, **dadurch gekennzeichnet, dass** es ein binokulares, zwei Monitore (2a, 2b) aufweisendes System ist.

3. Anzeigesystem nach Anspruch 1 oder 2, **dadurch gekennzeichnet, dass** der Abstand der Monitore (2a, 2b) an den Pupillenabstand (P_{D}) des Benützers anpassbar ist.

4. Anzeigesystem nach einem der Ansprüche 1 bis 3, **dadurch gekennzeichnet, dass** die Neigung des bzw. der Monitore (2a, 2b) an den Blickwinkel des Benützers anpassbar ist bzw. sind.

5. Anzeigesystem nach einem der Ansprüche 1 bis 4, **dadurch gekennzeichnet, dass** zumindest eines der Einstellmittel, insbesondere mehrere Einstellmittel, eine bzw. mehrere Drehachse(n) (DA₁, DA₂, DA₃, DA₄) ist bzw. sind.

6. Anzeigesystem nach einem der Ansprüche 1 bis 5, **dadurch gekennzeichnet, dass** die Drehachse (DA₁) zur Positionierung unterhalb der Hauptblickrichtung eine entweder horizontal verlaufende und quer zur Erstreckung des Körpers des Benützers orientierte Achse oder eine vertikal verlaufende Achse ist und innerhalb eines den Kopf des Benützers in einem Abstand umgebenden, zumindest im Wesentlichen kugelförmigen Raumes (3) angeordnet ist.

7. Anzeigesystem nach Anspruch 6, **dadurch gekennzeichnet, dass** die Drehachse (DA₁) zur Positionierung unterhalb der Hauptblickrichtung eine direkt am Helm oder dergleichen angeordnete Achse ist.

8. Anzeigesystem nach einem der Ansprüche 1 bis 7, **dadurch gekennzeichnet, dass** die Drehachse (DA₁) zur Positionierung unterhalb der Hauptblickrichtung oberhalb des vorderen Kopfbereiches oder hinter dem Kinnbereich des Benützers angeordnet ist.

9. Anzeigesystem nach einem der Ansprüche 1 bis 8, **dadurch gekennzeichnet, dass** die zur Anpassung der Neigung der Monitore bzw. des Monitors (2a, 2b) an den Blickwinkel vorgesehene Achse (DA₂) zumindest im Wesentlichen horizontal verläuft.

10. Anzeigesystem nach einem der Ansprüche 1 bis 9, **dadurch gekennzeichnet, dass** die zur Anpassung der Neigung der Monitore (2a, 2b) an den Blickwinkel vorgesehene Achse (DA₂) zu den zur Anpassung der Position der Monitore (2a, 2b) an den Pupillenabstand (P_{D})vorgesehenen Achsen (DA₃, DA₄) normal und in kreuzender Anordnung verläuft.

11. Anzeigesystem nach einem der Ansprüche 1 bis 10, **dadurch gekennzeichnet, dass** die zur Anpassung der Neigung der Monitore an den Blickwinkel vorgesehene Achse (DA₂) und die zur Anpassung der Position der Monitore (2a, 2b) an den Pupillenabstand (P_{D}) vorgesehenen Achsen (DA₃, DA₄) derart angeordnet sind, dass sie die beiden Monitore (2a, 2b) durchsetzen.

12. Anzeigesystem nach einem der Ansprüche 1 bis 11, **dadurch gekennzeichnet, dass** die zur Anpassung der Neigung der Monitore an den Blickwinkel vorgesehene Achse (DA₂) und die zur Anpassung der Position der Monitore (2a, 2b) an den Pupillenabstand (P_{D}) vorgesehenen Achsen (DA₃, DA₄) derart angeordnet sind, dass sie außerhalb der Monitore (2a, 2b) verlaufen.

13. Anzeigesystem nach einem der Ansprüche 1 bis 12, **dadurch gekennzeichnet, dass** die zur grundsätzlichen Positionierung des Anzeigesystems vorgesehene Achse (DA₁) mit jener zur Anpassung der Neigung der Monitore bzw. des Monitors an den Blickwinkel vorgesehenen Achse (DA₂) über zumindest ein flexibles Verbindungselement (6) verbunden ist, jedoch bezüglich der Einstellmöglichkeiten durch die beiden Achsen (DA₁, DA₂) entkoppelt ist.

14. Anzeigesystem nach einem der Ansprüche 1 bis 13, **dadurch gekennzeichnet, dass** die beiden Monitore (2a, 2b) an den zur Anpassung an den Pupillenabstand (P_{D}) vorgesehenen Achsen (DA₃, DA₄) gemeinsam drehbar sind.

15. Anzeigesystem nach einem der Ansprüche 1 bis 14, **dadurch gekennzeichnet, dass** die beiden Monitore (2a, 2b) an den zur Anpassung von den Pupillenabstand (P_{D}) vorgesehenen Achsen (DA₃, DA₄) unabhängig voneinander drehbar sind.

16. Anzeigesystem nach einem der Ansprüche 1 bis 15, **dadurch gekennzeichnet, dass** die beiden Monitore (2a, 2b) des Anzeigesystems jeweils mit einer Vergrößerungsoptik (11) und einer bilderzeugenden Einrichtung (12) versehen sind.

17. Anzeigesystem nach Anspruch 16, **dadurch gekennzeichnet, dass** die bilderzeugende Einrichtung (12) ein LCD, OLED oder dergleichen ist.
